# EUROPEAN PATENT SPECIFICATION

(11) **EP 4 431 855 B1**
(45) Date of publication and mention of the grant of the patent: **23.07.2025**
(21) Application number: 23217197.5
(22) Date of filing: 15.12.2023
(51) Int. Cl.: F28D 20/00

(54) **A THERMAL ENERGY STORAGE SYSTEM WITH THE FLUID INTERCEPTING SYSTEM INTEGRATED IN THE STORAGE TANK**
WÄRMEENERGIESPEICHERSYSTEM MIT DEM IN DEN SPEICHERTANK INTEGRIERTEN FLÜSSIGKEITSABFANGSYSTEM
SYSTÈME DE STOCKAGE D'ÉNERGIE THERMIQUE AVEC LE SYSTÈME D'INTERCEPTION DE FLUIDE INTÉGRÉ DANS LE RÉSERVOIR DE STOCKAGE

(30) Priority: 17.03.2023 IT 202300005133
(43) Date of publication of application: 18.09.2024
(73) Proprietor: Italmatic Presse e Stampi Srl, 20122 Milano (IT)
(72) Inventor: MARIANI, Stefano, 55031 Camporgiano (IT); BRISIGHELLI, Carlo, 55051 Barga (IT)
(74) Representative: Emmi, Mario

(56) References cited:
- EP-A2- 0 878 682
- EP-B1- 0 683 362
- DE-A1- 19 608 405
- JP-A- S6 011 093
- US-A- 4 510 922
- US-A1- 2007 227 468
- US-B2- 10 119 724

## Description

### Scope of the invention

The present invention concerns the technical sector relating to energy recovery, in particular thermal energy.

In particular, the invention refers to a system for storing heat on different stratification levels in a single tank comprising a meatus sequential opening device, integrated within the tank itself.

The invention also refers to the operating method in the context of production processes characterised by cycles of heating and subsequent cooling of containers within which the product is processed.

### Brief outline of the prior art

Production processes in which it is necessary to introduce energy and produce heat are generally known.

Generally, it is proceeded with the heating steps by means of electric or direct or indirect combustion heaters and then a subsequent forced cooling step follows, for example by means of water or oil circulation heat exchangers connected to refrigeration systems capable of dispersing the generated heat.

To limit energy consumption in the heating step, techniques have been developed to store the heat subtracted during the cooling steps inside tanks containing water or oil or in any case liquid carriers, and to then return this heat during the heating steps.

This technique, applied in different areas of current use, as well, in order to be effective, that is in order to obtain a high efficiency, needs to have the lowest thermal jump between the carrier fluid inside the process vessel and the fluid that stores the heat itself.

To do this, it is not only necessary to optimize all the heat exchangers that participate in the process, but it is necessary to fractionate the temperature interval between the ambient temperature and the maximum process temperature into a number of intervals such that within each heating step, i.e. cooling step, the temperature delta of the carrier fluid and the storing fluid is minimum between the initial value and the final value for each stage of the heating process, i.e. of the refrigeration process.

This involves using a large number of distinct volumes in which to store the thermal storage liquid. These volumes can be structurally separated as tanks physically isolated from one another or thermally separated like in the case of a single tank subdivided into volumes by septa that limit or prevent the convective motions and facilitate stratification. A thermal storage system according to the preamble of claim 1 is described in document EP 0 878 682 A2.

In any case, for each of the thermal storage volumes, whether they are combined in a single tank or separated into several tanks, it is necessary to have intercepting systems that allow the selective passage of the fluid between the cooling/heating exchanger and the corresponding storage volume characterized by a specific temperature of the process step.

Generally, the thermal processes can operate at temperatures comprised between 100 and 300 °C and the liquids that can be used for storage can be water or diathermic oil.

In case water is used, it is clear that these are pressurised plants even at high pressure values, while using oil does not require pressurisation.

In accordance with the current state of the art, plants are being developed consisting of a stratified tank or of several tanks separated from each other, characterized by the use of several disconnecting valves, installed individually for each tank or for each level of the stratification tank.

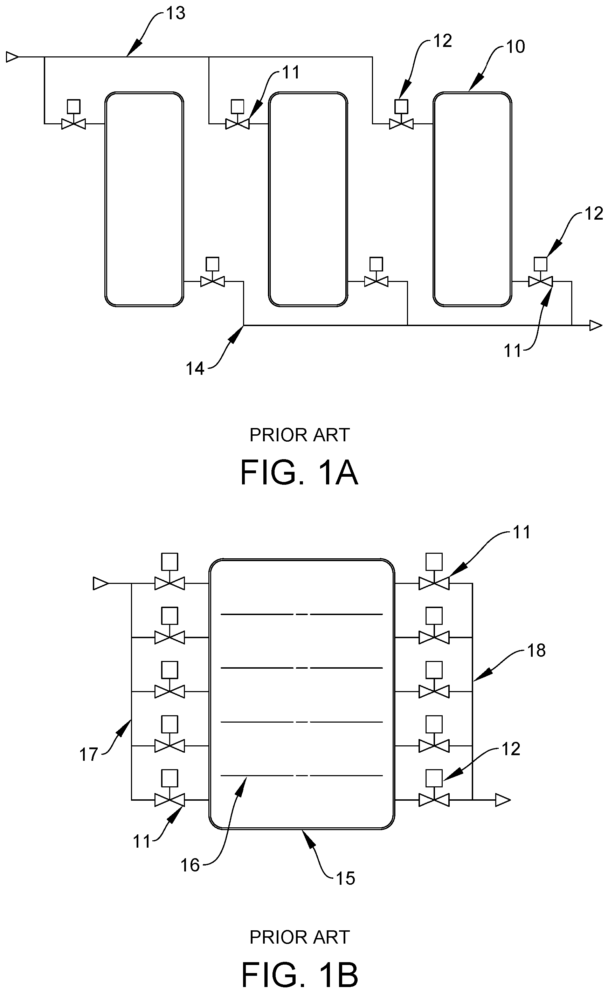

To this end, Figures 1A and 1B show the principle diagrams of the current state of the art:
Fig. 1A shows a known solution with tanks 10 and valves 11 separated from each other and commanded by electric, pneumatic or hydraulic type motor means 12.

Each valve controls an inlet piping 13 or an outlet piping 14. In this case, each tank contains the fluid at an almost homogeneous temperature and the valves are external thereto.

This solution involves the use of a number of tanks and a number of valves corresponding to the number of fractionations desired. This involves high costs in relation also to the operating pressure, high thermal dispersion, risks of losses and leakages, high circuit complexity.

Fig. 1B shows a further known solution, with a single tank 15 provided with separation septa 16 and with the external intercepting valves 11 controlling the inlet piping 17 and the outlet piping 18.

Although this solution is cheaper than the previous one described, it still has high costs deriving from the need to use high-pressure and/or high-temperature valves. In addition, this solution has a thermal dispersion due to the external valves and has risks deriving from losses and leakages.

Ultimately, therefore, being such plants operating at high pressures and/or temperatures, such valves are characterized by a resistance to temperature and to pressure that entails high costs and possible critical failures.

In addition, each of these valves and the fittings connected to it must be insulated with respect to the surrounding environment to limit thermal dispersion and this entails considerable ancillary costs. The multi-valve control system involves considerable software hardware costs based on the number of stages and of transducers used.

### Summary of the invention

It is therefore an object of the present invention to provide a storage system that solves, at least in part, the aforementioned technical drawbacks.

In particular, it is an object of the present invention to provide a storage system that allows to obtain a simplification of the storage and management process with also a higher efficiency and a greater economy in the construction and operation of thermal storage systems.

More particularly, it is an object of the present invention to provide a storage system in which it is not necessary to use intercepting devices, for example valves, adapted to work at high pressure and/or temperature, thereby being able to resort to intercepting devices, for example as said valves, which are more economical while also reducing heat dispersions and leakages.

These and other purposes are therefore achieved by the present thermal energy storage system comprising:
- At least one tank (1) comprising on its inside at least one or a plurality of septa (6) overlapped on each other along the height of said at least one tank in such a way as to define chambers overlapped on each other that allow to obtain, in use, a stratification of the fluid at different temperatures inside said tank;
- One or more fluid intercepting devices (4, 38A, 39B, 59, 60) (e.g. one or more valves) to allow the fluid to be sent from the outside of the tank into the tank chambers and/or said fluid to be sent from the chambers to the outside of the tank;
- In accordance with the invention, said one or more fluid intercepting devices are all arranged inside the tank.

In accordance with this solution, all the purposes of the invention are now easily achieved.

Thanks to the fact that the intercepting devices (for example, as said, the valves) are arranged directly inside the tank, they will work in a certain pressurised environment and at a certain temperature.

The thermal dispersion between the intercepting devices and the external environment is cancelled, as they are immersed directly in the fluid contained in the tank.

In addition, the pressure jump will be reduced compared to cases of external valves that suffer from a greater pressure jump due to the difference between the pressure of the environment and those of the fluid circulating in them. In this way, the possible leakages do not entail dispersion of the fluid to the outside as they are immersed in the tank itself.

In a nutshell, therefore, the invention consists in the integration of the storage fluid intercepting device(s) inside the tank itself so that there is not a high pressure delta between the fluid and the environment in which said intercepting device is inserted in order to be able to use intercepting devices (for example valve elements, such as valves) that are technologically simpler and economically advantageous.

Advantageously, therefore, the septa are placed at a certain distance from each other.

In this way, advantageously, two consecutive septa form a chamber or even a septum and the apex of the tank or its bottom form a further chamber.

Advantageously, in a preferred form of invention, actuation means for activating said one or more intercepting devices are comprised.

According to the invention, said actuation means are arranged inside the tank.

This solution is advantageous in that it makes it possible to considerably simplify the system for managing the opening and closing of the intercepting devices, the whole being reduced to a simple position control for example of a linear or rotary actuator that can be used as actuation means.

However, in this invention, a solution of control in opening/closing (or activation/deactivation) of said intercepting devices is also not excluded, even with singular actuation means that can be arranged externally at a distance from the tank and therefore not necessarily arranged inside the same.

In all the configurations described, advantageously, said actuation means can be configured to activate said intercepting devices sequentially, i.e. in succession.

According to a preferred solution, advantageously said actuation means can provide a single mechanical means and, as mentioned, at least partly arranged in the tank.

According to the invention, said actuation means comprise a rod that is inserted into said tank at least in part, in such a way as to intercept said intercepting devices.

According to the invention, said rod has an actuation motion to activate said intercepting devices.

Advantageously, such actuation motion can for example provide a sliding motion along the insertion seat of said rod in the tank or a rotation motion around its longitudinal axis.

In all embodiments of the invention, advantageously said intercepting device may be in the form of a valve.

The valve is well known in the sector and there are multiple valves that can be used commercially and could be used for the present invention.

The valve, as is well known, is operable between an opening position, in which it allows the passage of a fluid through it (thereby creating a fluidic passage) and a closing position in which a shutter is activated to close said passage.

The valve is therefore interposed in a fluidic passage path while being activated in order to selectively open this path to the passage of a fluid or obstruct and therefore interrupt said path.

As mentioned, they are well known and not specific subject-matter of the present invention.

The person skilled in the art will be able to evaluate which type of valve is most suitable for his purposes.

Advantageously there are a delivery conduit (8) for leading the fluid in the tank (1) and an outlet conduit (7) for expelling the fluid out of the conduit.

Advantageously, the delivery conduit and the outlet conduit pass through all the septa in such a way as to penetrate into the relative chambers generated by said septa.

Advantageously, for each chamber, there are an intercepting device, for example a valve, connected to said delivery conduit for filling the relative chamber with said fluid and a further intercepting device, for example a valve, connected to the outlet conduit for expelling the fluid from the relative chamber.

Advantageously, for all the configurations described, there is at least one intercepting device (e.g. one valve) for each chamber of the tank (preferably two intercepting devices, e.g. two valves, for each chamber).

Advantageously, in all the configurations described, the intercepting devices may also not be exclusively valves but, more generally, valve elements.

Valve elements are therefore more generically understood to be a selective passage element for a fluid (for example gas or liquid) operable between an open position, in which it allows the passage of the fluid, and a closed position in which it prevents said passage.

Advantageously, a plant comprising an autoclave and a system in accordance with one or more of the above characteristics is also an object of the present invention.

More particularly, advantageously, the object of the present invention is a plant comprising:
- An apparatus;
- A thermal energy storage system, in accordance with one or more of the above characteristics;
- A heat exchanger (21) that puts said apparatus in thermal communication with said thermal energy storage system, in such a way that the stratified heat present in the tank of the system is transferable sequentially to the autoclave through said exchanger and/or vice versa the heat produced by the autoclave is transferable to the tank of said thermal energy storage system.

Advantageously, in a preferred solution, the heat exchanger can be placed directly inside the apparatus.

Advantageously, the apparatus can for example be an autoclave usable in various production processes, for example pneumatic ones or any other sector.

Advantageously, the use of a system, in accordance with one or more of the above characteristics, for the recovery of the process heat is also an object of the present invention.

A thermal energy recovery method is also an object of the present invention, the method comprising the following steps:
- Arrangement of a thermal energy storage system, in accordance with one or more of the above characteristics;
- Arrangement of an apparatus (20) adapted to operate a process, for example an autoclave (20);
- The system being in fluid communication with said apparatus through a heat exchanger (21) that allows the transfer of heat from the fluid (for example a liquid such as water) contained in the tank to the apparatus and/or vice versa;
- The method providing for a heating process of the apparatus starting from an initial temperature until reaching a certain final temperature by exploiting the stratified fluid at different temperatures present in the chambers of the tank, said process providing for a passage of said fluid, contained in the tank, through said exchanger (21) in such a way as to transfer heat to the apparatus;
- The passage through the exchanger starting from the layer of fluid at a lower temperature (T1) that is present in the tank in a chamber thereof and continuing in succession with the layers at increasing temperature (T2, T3), once each relative layer has completed the release of its heat thereby raising the temperature of the apparatus gradually (or steps as the case may).

In this way, the heat stored in the tank through the stratification of the temperatures in it can be advantageously exploited to raise the apparatus to a certain operating temperature, therefore with considerable energy savings.

Advantageously, said sending in succession of layers of fluid at different temperatures takes place through a sequential activation of the intercepting devices present in each chamber of the tank.

Advantageously, the reverse process can be activated to withdraw heat from the apparatus and store it in the fluid in a stratified manner in the tank.

In this way, the heat subtracted from the apparatus that in a certain working process thereof is in a forced cooling step can be transferred back, through the exchanger (21), to the tank with which it is in communication. In this way, the tank stores in stratified manner a fluid with different temperatures for each layer (each chamber has a different temperature compared to the next layer).

The operation in this case is exactly the reverse, so that from the highest temperature generated by the apparatus, temperature is released to the tank in a decreasing manner until the maximum cooling of the apparatus.

### Brief description of the drawings

The invention, in one or more of its embodiments, will be detailed below in accordance with the following drawings:
- Figures 1A and 1B show two solutions of known art;
- Figure 2 shows a solution in accordance with the invention with the valves placed in the tank and highlighting the stratification of the temperatures starting from the layer at lower temperature (T1) at the bottom of the tank and with the upper stratifications at a higher temperature (T2..Tn);
- Figure 3 shows an overall plant diagram in which the system subject-matter of the invention is connected and cooperating with an autoclave;
- Figures 4A and 4B are thermal diagrams showing the thermodynamic principle of energy recovery in accordance with the invention;
- Figure 5 shows the overall plan view of the possible embodiment (30) while Figure 6 shows the same construction example in sectioned axonometric view, always consisting of a metal tank (31) of adequate thickness to withstand the operating pressure;
- Figures 7 and 8 show a further variant of the invention.

### Detailed Description of some invention configurations

As discussed in more detail below, the invention can be realized in various ways. Each technique described represents an example of a possible non-exclusive and non-exhaustive embodiment.

The essence of the invention, as better highlighted in the claims and in the continuation of the present description, consists in the transfer of intercepting devices 4 from the outside of the storage tanks to the inside of the same in order to reduce the costs and optimize efficiency.

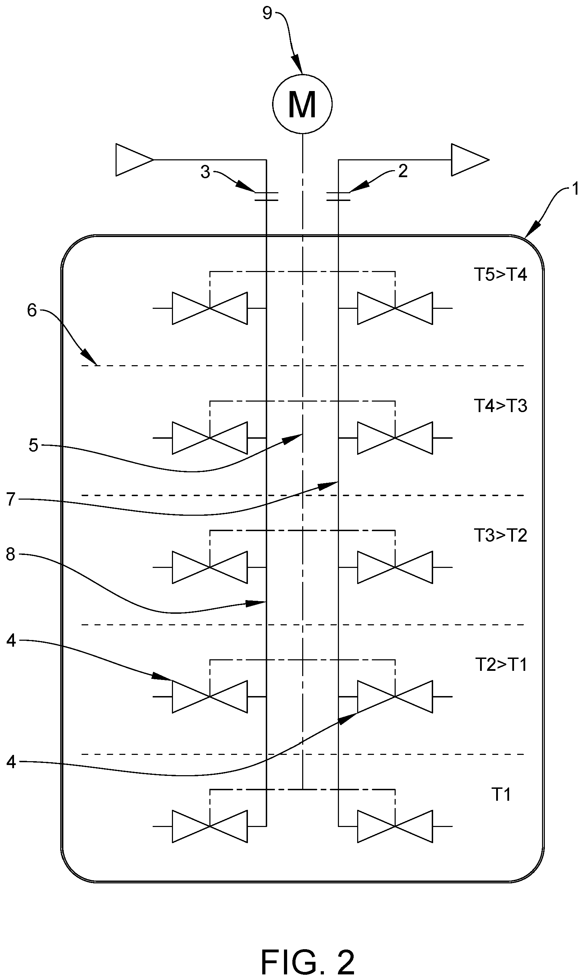

Referring to the figures, we can see the circuit diagram of the proposed innovation (Fig. 2), in relation to an equivalent example of the state of the art (Fig. 1A and Fig. 1B).

The object of the present invention is therefore a thermal energy storage system comprising:
- At least one tank (1) comprising on its inside at least one or a plurality of septa (6) overlapped on each other along the height of the tank in such a way as to define chambers overlapped on each other that allow to obtain, in use, a stratification of the fluid at different temperatures (T1, Tn) inside said tank; in particular each chamber has a different temperature that varies from one chamber to the next one, for example in an increasing manner starting from the bottom of the tank upwards.
- One or more fluid intercepting devices (4, 38A, 39B, 59, 60) to allow the fluid to be sent from the outside of the tank into a chamber of the tank and/or said fluid to be sent from the chamber to the outside of the tank;
- In accordance with the invention:
- Said one or more fluid intercepting devices are arranged inside the tank.

In particular, for each chamber there is at least one intercepting device to allow the fluid to be sent from the outside of the tank into the relative tank chamber and/or said fluid to be sent from the chamber to the outside of the tank. All the intercepting devices are therefore arranged within the tank.

In accordance with the invention, an intercepting system (4, 5, 9) is therefore present.

The intercepting system comprises one or more intercepting devices 4 as introduced above, for example in the form of valves or valve elements in general, and actuation means (5, 9) to activate the opening or closing said intercepting devices 4.

In accordance with the invention, at least said intercepting devices 4 used for filling or emptying the tank 1 are placed inside the tank itself.

Thanks to this solution, special sealing measures are no longer required, since the pressure delta between the fluid intercepted by the (internal) device and the fluid in which the intercepting device is immersed is very small.

Similar considerations can be made between the pressure upstream and downstream of these devices, which pressure is limited only by the pressure losses of the pipings. In addition, any losses and leakages of the sealing devices does not affect the operation of the system.

In an advantageous form of the invention also the actuation means (5, 9) are at least partly arranged within said tank.

The command (5, 9) (i.e. said actuation means) for activating the intercepting devices 4 inserted inside the tank can be realized for example by a command element 5 which can have a rotary or linear motion, as better highlighted in the embodiments immediately below.

This command element, being activated by a single motor (M) for all the intercepting devices, represents an important economic advantage compared to the conventional systems in which each valve has its own electrical or pneumatic command.

For the aforementioned reasons, the intercepting devices 4 have a much lower cost than the conventional solution, since they do not present sealing problems and have a zero thermal dispersion since they are a unique ensemble with the tank itself.

Figure 2 shows the schematic diagram of the principle in accordance with the invention, in which the tank 1 can be seen inside which the intercepting devices 4, for example the normal valves 4, are positioned.

The tank 1 is subdivided horizontally by means of a plurality of septa 6.

These septa are intended to limit the convective motions and allow the thermal stratification of the fluid.

These septa 6, as immediately described below, can be made of metal or other material.

Obviously, the metal or the material generally selected must meet the required temperature and pressure resistance requirements that may be generated inside the tank.

Preferably, these septa must not be sealed in order to be able to allow the passage of any air present towards the upper part of the tank.

Each septum, as thus clearly highlighted in Figure 2, creates a chamber in the tank.

More septa overlapped on each other at a certain distance result in the formation of more chambers stacked together along the height of the tank.

The intercepting devices 4, for example valves or valve elements in general, are arranged inside the chamber (preferably in all chambers).

At each volume delimited by two consecutive septa (i.e. in a chamber) there are therefore two intercepting devices 4, for example two valves or valve elements in general.

By way of non-limiting example, in fact, Figure 2 shows the presence of four septa that subdivide the internal volume of the tank 1 into five mutually overlapped chambers. In each of these chambers there are two intercepting devices 4 (in particular two valves) and of which, as clarified below, one is connected to an inlet manifold 8 while the other is connected to an outlet manifold 7.

As introduced above, in fact, each individual intercepting device, for example a valve as mentioned, is connected to a common tube (7, 8) defined as a manifold and through which the fluid is sent and collected. The manifolds are connected to the inlet and outlet fittings 2 and 3.

The inlet manifold 8 can therefore simply be a duct through which the fluid enters into the tank in a specific chamber delimited by the aforementioned septa and then exits from the outlet manifold 7.

In essence, again with reference to Figure 2, an inlet manifold 8 and an outlet manifold 7 are therefore provided.

Joint actuation means, are used to operate the intercepting devices 4 in a sequential manner.

The preferred solution provides for the aforementioned command element 5, for example in the form of a rod, which acts on all the intercepting devices 4 by opening them in sequence as a function of the position assumed by it. The opening of the individual valves 4 is in relation to the linear or rotary position of the command element in question. By travelling all the excursion or the rotation of the command element 5, all the valves are opened sequentially.

In summary, the fluid is sent through the inlet manifold 8 at the predetermined volume delimited by two septa and withdrawn from it as a function of the position of the command element 5 while all the intercepting devices relating to the other levels of the tank are closed.

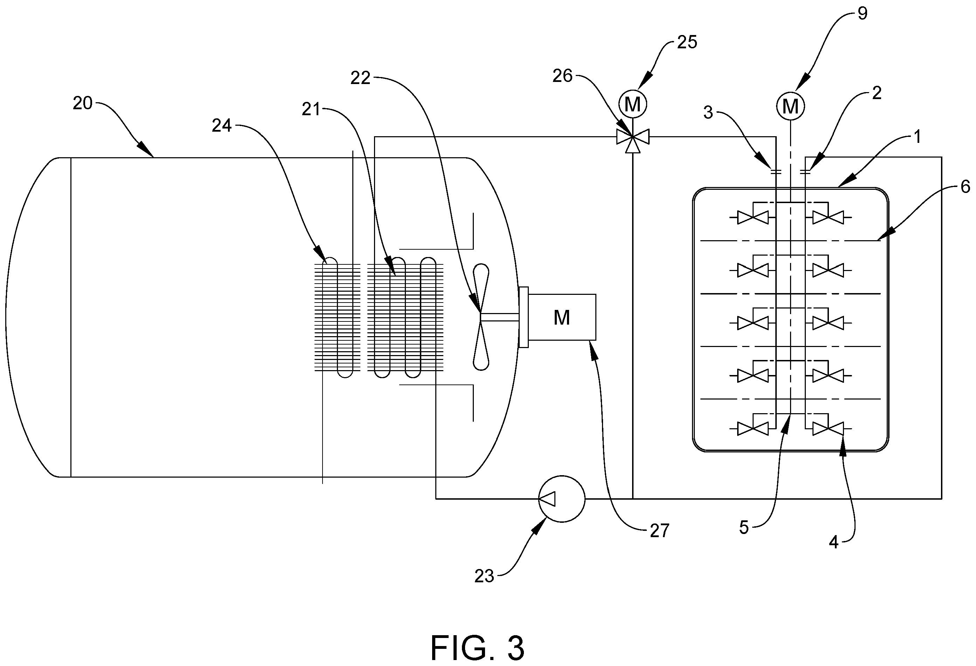

Figure 3 depicts the circuit diagram of the invention inserted in an autoclave system for the heat treatment of a generic product.

This diagram has been summarized to the maximum and only the components useful for describing the function of the invention are highlighted.

This diagram represents only a possible use of the present invention and other applications are possible in areas where thermal energy storage is required.

With reference to Figure 3 we can see the thermal tank 1 with its elements as described in Fig. 2. The tank is connected to a pump 23 and to a mixing valve 26 commanded by the motor 25. The mixing valve 26 is connected to the exchanger 21 (e.g. liquid/gas such as water/air or oil/air), which transfers heat inside the autoclave 20. Downstream of the exchanger there are the electrical resistors 24 that are necessary to bring the plant to the maximum temperature required by the ongoing process. The air inside the autoclave is moved by the fan 22 keyed to an electric motor 27.

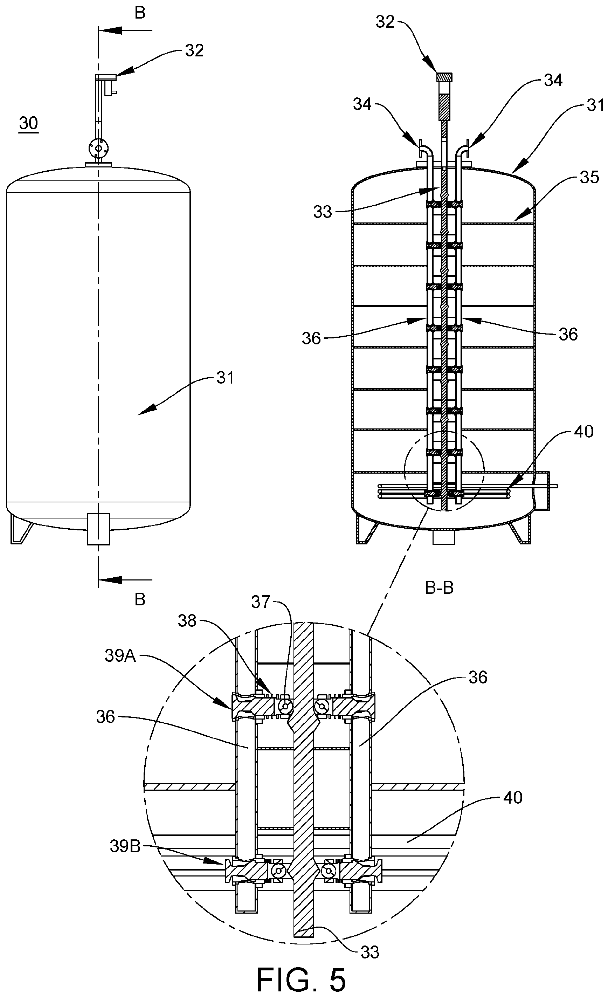

Figures 5, 6, 7, 8 represent non-limiting examples of how the invention can be technically realized.

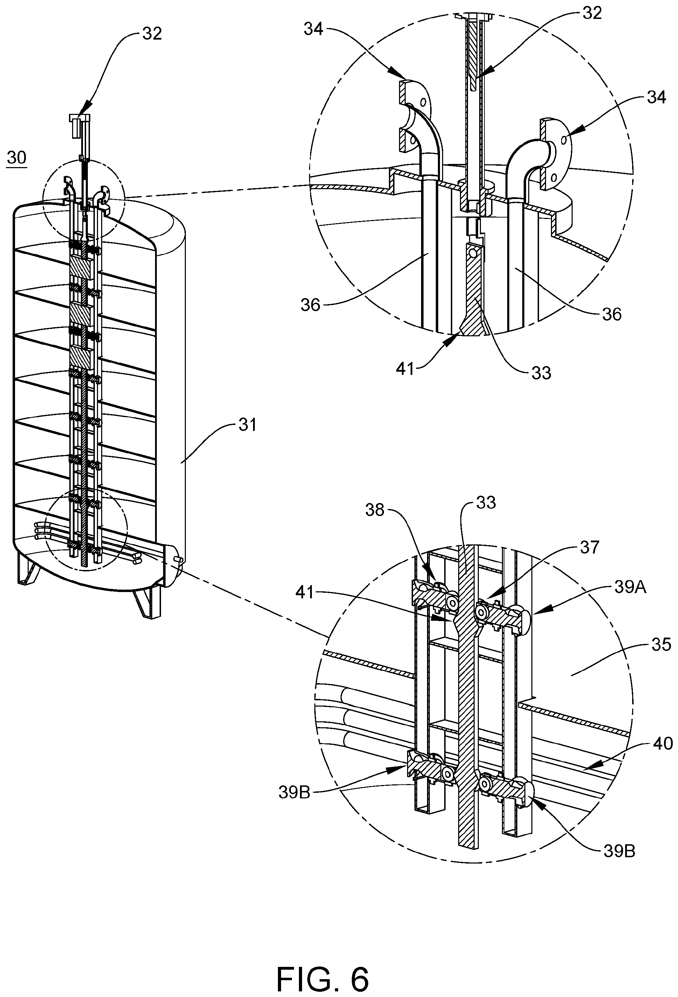

Figure 5 shows the overall plan view of the possible embodiment 30 while Figure 6 shows the same construction example in sectioned axonometric view and consisting of a metal tank 31 of adequate thickness to withstand the operating pressure.

Inside the tank at regular intervals the dividing septa 35 are positioned, for example made of metallic, or ceramic, or plastic or other material that hinder the mixing of the fluid and facilitate stratification.

At the top of the tank, at a removable flange, the fittings of the inlet and outlet pipings 34 are positioned. These fittings are connected to two pipings 36 (for example of square or rectangular section) that convey the incoming fluid to the individual intercepting devices (39A, 39B) and convey the outgoing fluid from the intercepting devices (39A, 39B) to the corresponding outlet flange.

The opening of the intercepting devices (39A, 39B) is commanded via the command element 33.

This command element consists of a rod 33 (for example metallic and/or for example of rectangular section) provided with laterally protruding cams 41 (see Figure 6) which contrast with a wheel 37 integral with the shutter of said intercepting device, thereby allowing it to be opened.

The closing of the intercepting devices (39A 39B) is carried out by the force of a spring 38 which is antagonist to the thrust of the cam.

In the details of Figure 5 and Figure 6, an intercepting device is highlighted in the closed position (39A) and one in the open condition (39B).

In fact, precisely in the detail of Figure 6, the rod 33 is highlighted, which has been translated into a position such that a cam 41 of the rod 33 intercepts the valve (39B), thereby pushing the shutter of said valve into the open position, while the other cam 41 is placed out of contact by the shutter of the valve (39A), thereby with the valve remaining in the closed position.

The relative distance of the cams 41 along the command element 33 and the relative position of the valves along the conduit 1 is such as to cause a total opening of only one valve at a time, therefore with a sequential opening in succession.

Except for only one possible moment of transition in which two adjacent devices can be partially open.

This technique allows to have no pressure peaks or water hammers during switching.

The command element 33 is moved vertically by means of a motor means 32 placed outside the tank itself.

It preferably consists of a linear actuator, for example a trapezoidal or recirculating screw, provided with an appropriate position transducer that allows the correct control of the system.

A temperature sensor for measuring the temperature of each stage will be positioned outside the tank at each volume delimited by the septa.

In addition, at each stage an electrical resistor can be advantageously inserted for preheating the system, i.e. for maintaining it at a temperature in the interval between two subsequent cycles.

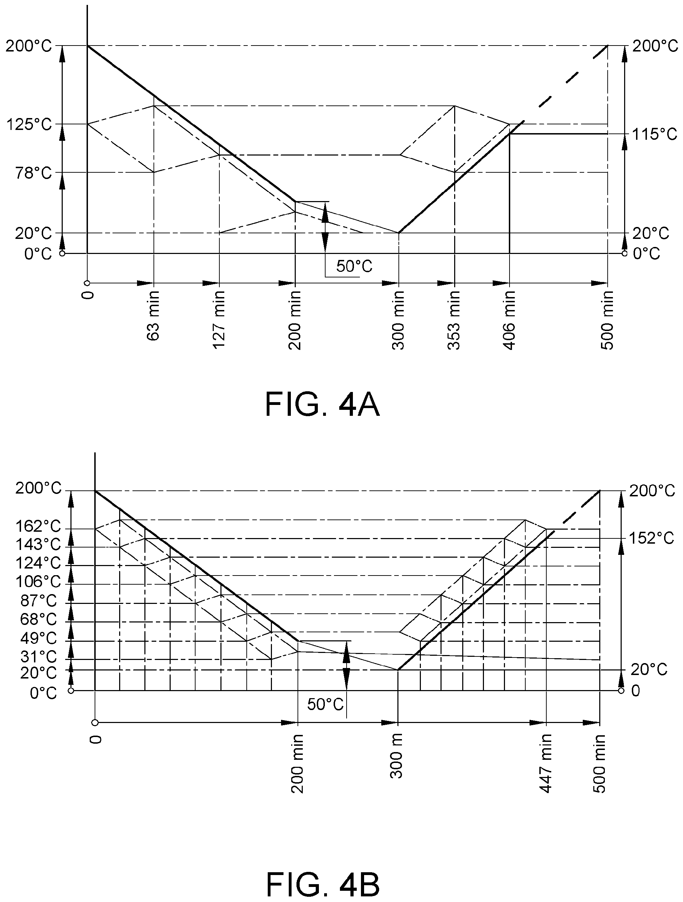

Since, as can be observed from the diagrams of Figure 4A and 4B, the final cooling step of the autoclave requires that the temperature of the last stage of the storage tank has a sufficiently low temperature to reach the door opening condition of the autoclave itself, it is necessary to have an exchanger 40 advantageously inserted inside the tank itself and connected to a dissipation system such as an evaporative tower or chiller.

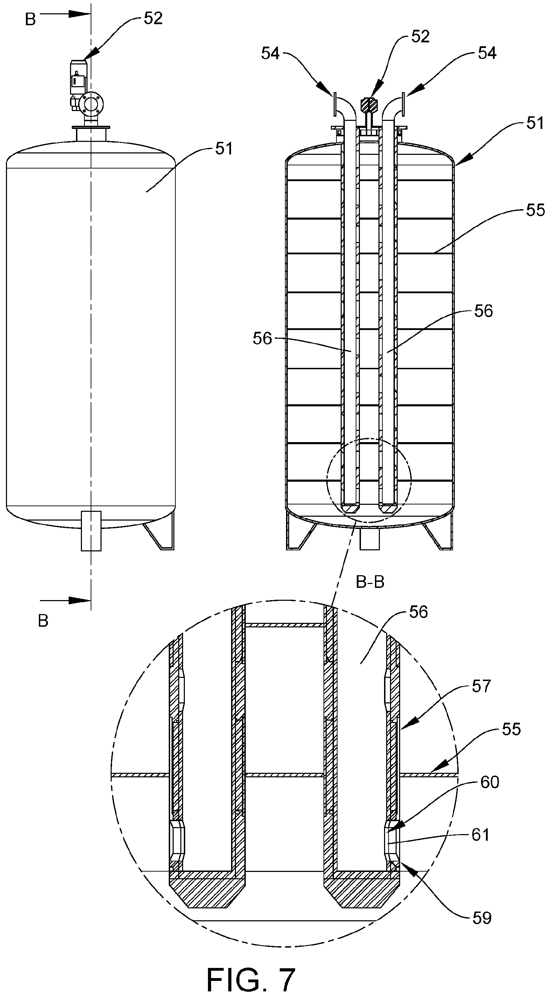

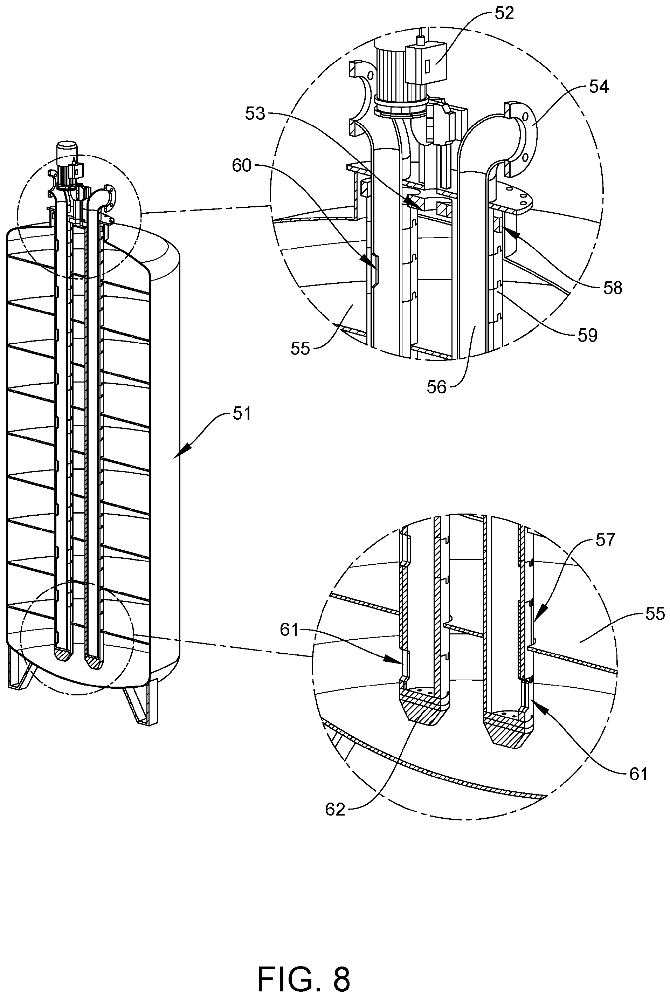

Figure 7 shows the overall plan view of a second possible embodiment, while Figure 8 highlights the same construction example in sectioned axonometric view.

Also in this case there is always the usual metallic tank 51 of adequate thickness to withstand the operating pressure.

Inside the tank, at regular intervals, there are always positioned the dividing septa 55, for example in metallic, or ceramic, or plastic or other material that hinder the mixing of the fluid and facilitate stratification.

At the top of the tank, at a removable flange, the fittings of the inlet and outlet pipings 54 are positioned. These fittings are connected to two pipings 56, for example of circular section, provided with lateral perforations 60 and which convey the incoming fluid to the individual intercepting devices 59.

This part is therefore identical, de facto, to the first configuration already described.

In accordance with this solution, the intercepting devices now consist of cylindrical rings that are free to rotate, also provided with a similar perforation 61.

The relative position of the intercepting device 59 with respect to the central tube 56 causes the two holes 60 and 61 to be aligned, allowing the passage of the fluid from the inlet piping towards the tank and in the opposite direction from the tank towards the outlet tube.

Since this embodiment of the invention is perfectly specular, there is no difference between the two inlet and outlet pipings, which can therefore be reversible.

The rotation of all the outer rings 59 constituting the intercepting devices is commanded by the command element 57 consisting of a tube with protruding toothing that couples with the corresponding toothing on the intercepting devices.

The relative position of the individual circular rings 59, suitably mounted by offsetting the toothing thereof, entails that for a single couple of rings the perforation between the inner tube 60 and the outer tube 61 coincide whereas for all the other rings the perforations are not coincident.

In this way the passage of the fluid takes place only at the desired volume delimited between two septa 55, as described for the other configuration.

In summary, the piping through which the fluid arrives is connected to a single volume comprised between two septa and, vice versa, this volume is connected to the outlet piping.

During the switching step it is possible that the openings of two adjacent levels are partially open at the same time, thus making the switching smoother and more progressive, avoiding overpressures and water hammers.

In the details of Figure 7 and Figure 8, an intercepting device is highlighted lower down in the open position while all the others are closed.

The command element 57 is rotated by means of a motor means 52 placed outside the tank itself.

Said motor means 52 may for example be constituted by a gearmotor whose shaft is connected to the gear wheel 53.

The gear wheel 53, in turn, engages with the corresponding wheel 58 placed at the upper end of the chain constituted by the sectioning rings of each tube.

As in the previous embodiment example, a temperature sensor for measuring the temperature of each stage will be positioned outside the tank at each volume delimited by the septa.

In addition, at each stage an electrical resistor can be advantageously inserted for preheating the system, i.e. for maintaining it at a temperature in the interval between two subsequent cycles.

### OPERATING PRINCIPLE:

Figure 4A and 4B depict the time diagrams of the cooling and heating steps of a plant conceptually similar to that described in Figure 3 but having a number of fractionings equal to three in the first diagram (Fig. 4A) and equal to eight in the second diagram (Fig.4B).

Both diagrams provide a maximum process temperature of 200 °C, an ambient temperature of 20 °C and an end-of-cycle temperature corresponding to the opening step of the door of the autoclave of 50 °C.

The marked solid line represents the internal temperature of the autoclave.

The left part represents the cooling step starting from the temperature of 200 °C to 50 °C, the ascending part on the right represents the heating step starting from 20 °C to reach the process temperature.

The part represented by the continuous ascending line highlights the heating of the autoclave and of the product contained therein due to the release of heat of the fluid stored in the tank subject-matter of the invention and described above, while the final dashed part represents the last heating step obtained by means of external heat supply presumably by means of electric heating or with diathermic oil.

The initial temperatures of the various stages of the tank are reported on the left, the initial and final temperatures of the individual steps are reported on the right.

The values contained in the diagrams, while being influenced by other factors such as the volume of the tanks and the dimensions of the autoclave, the efficiency of the exchangers, etc. still represent reference values to evaluate the efficiency of the proposed method.

Referring to Figure 4A, which represents the three-stage system, it can be observed that the temperature reached by the system for the sole contribution of the stored fluid is 115° with a temperature increase of 95 °C with respect to the initial temperature (difference between said temperature of 115° and 20°). Since the total increase required is 180 °C (from 20° degrees on the right-hand scale it is necessary to reach 200° again on the right-hand scale), we can affirm that the efficiency of the process understood as the ratio between the total energy and the contribution of the storage system described is 95/180 = 53%

While referring to Figure 4B which represents the eight-stage system, it can be observed that the temperature reached by the system for the sole contribution of the stored fluid is 152° with a temperature increase of 132 °C (152° minus the initial 20 °C always shown on the right) compared to the initial temperature. Since the total increase required is 180 °C (200° minus the initial 20°), we can affirm that the efficiency of the process understood as the ratio between the total energy and the contribution of the storage system is 132/180 = 73%.

This suggests that the greater the number of the stages, that is, of the temperature intervals with which the process is fractionated, the greater the efficiency becomes with the other factors that contribute to the final result being equal.

It can be demonstrated that as the maximum temperature decreases, the efficiency decreases considerably.

Furthermore, this analysis did not take into account either the dispersions of the accumulator between the heating and cooling steps or the dispersions of the system for maintaining the temperature of the autoclave.

Despite these approximations, the statement that the greater the number of stages is, the greater the efficiency remains true. But referring to Figs. 1A and 1B it can be understood that the cost of the known plants increases considerably with the increase of the tanks and of the valves necessary for fragmentation.

Once the diagrams have been introduced, with reference to the example diagram of Figure 3, the operation is as follows.

Thanks to the described storage system comprising the stratified tank 1 with the valves (i.e. the intercepting devices according to the various configurations described) placed internally, it is possible to store the process heat and then progressively return it, according to needs, as per example diagrams of Figure 4A and 4B.

The number of stages therefore depends on the number of septa present and more stages are carried out with smaller thermal release intervals between them and the greater the efficiency will be (in fact, compare the case of three stages in Figure 4A with the case of eight stages in Figure 4B)

To correctly describe the working cycle, we must assume that it is fully operational, i.e. that it has already run a few cycles and has therefore already stored a quantity of heat inside the tank itself, or that it has brought the tank itself to operating temperature by means of electrical resistors or another technique.

The tank, therefore, already contains the stratified fluid in the various chambers with increasing temperatures from a lower chamber to the upper one (see for example Figure 2 to this end). It is not essential that all the chambers are filled so that starting from the lower chamber, in succession one or more chambers can contain the stratified fluid with increasing temperatures.

Therefore, starting from the condition of autoclave at ambient temperature with the product to be treated also cold, the heating cycle will begin with sending the fluid to the exchanger 21 through the pump 23 withdrawn in the lowest temperature zone of the tank 1 with the opening of the valves 4 (in any case of the intercepting device generally used) placed lower down inside the tank itself.

The temperature inside the autoclave will increase while the temperature of the low level of the tank will decrease by a value given by the ratio of the thermal masses between the autoclave and the tank itself.

In this step, therefore, the fluid is withdrawn through the opening of the relative valve and sent along the outlet conduit to pass into the exchanger and be reintroduced into the same chamber through the opening of the other valve through the inlet conduit. Obviously the re-entering fluid will be colder because it has released heat in the passage through the exchanger 21.

Once a fluid temperature value has been reached that is now insufficient to release further heat to the autoclave, the command system, by acting on the command motor M of the actuators, will switch the closing of the lower valves and the opening of the upper valves (i.e. those relating to the immediately following chamber with higher temperature fluid) allowing the liquid contained in the corresponding volume delimited by the septa to provide sufficient heat to further raise the temperature of the autoclave, according to the process already described.

This sequence is repeated for a number of times equal to the number of stages that characterize the system until the maximum temperature allowed by the system is reached, i.e. those temperatures at which the fluid in the tank no longer has a temperature delta sufficient to release heat to the autoclave. The number of stages therefore corresponds to the number of chambers containing the liquid.

Once the heating step deriving from the energy recovery through the tank, to bring the autoclave to the operating temperature necessary for the ongoing process, has been ended, an auxiliary heating device 24 will be activated consisting of electrical resistors or of water or diathermic oil exchangers not covered by this study.

Once the operating temperature has been reached, the autoclave will be kept at temperature for the time necessary for the ongoing process by means of the auxiliary heater 24.

At the end of the maintenance step, the cooling step begins, which will be obtained by circulating through the pump 23 inside the tube bundle exchanger 21 the liquid contained in the highest level of the tank itself, which is at a lower temperature than that of the autoclave as a result of the heat release that occurred during heating.

At this stage the temperature of the autoclave decreases and that of the corresponding septum of the tank increases. Upon reaching the temperature value whose delta is no longer able to subtract heat from the process, the command motor M of the valves will cause the top valve to close so as to allow the opening of the valves of the lower chamber and allow further cooling.

By repeating the sequence for the number of chambers that characterize the system, we reach the lower limit temperature that allows the opening of the door and the process to end.

Once this cooling step is ended, the tank is characterised by reaching the temperatures that allow restarting a subsequent heating step.

It is useful to highlight that if the temperatures inside the tank are lower than the optimal ones, the cycle works the same, obviously reducing the recovery efficiency and therefore entrusting the auxiliary heater with the task of bringing the temperature to the process value, but it is clear that in the subsequent cooling step of the autoclave the temperature values inside the tank will increase until reaching after a few cycles the optimal values.

To make the management independently of the transitional condition given by the first use or by a use after a long time, an auxiliary heating system of the tank has been provided, not indicated in the tables, which allows to bring or maintain the individual sectors of the tank at the optimal temperature value.

The invention described herein can be applied in many technical fields including, by way of non-limiting example, in the processes for working and/or lamination of the laminated glasses, the polymerization of composite and/or thermoplastic materials inside autoclaves, furnaces and/or presses and the like.

## Claims

1. A thermal energy storage system comprising:
- At least one tank (1) comprising on its inside at least one or a plurality of septa (6) overlapped on each other along the height of the tank in such a way as to define two or more chambers overlapped on each other that allow to obtain, in use, a stratification of the fluid inside said tank;
- One or more fluid intercepting devices (4, 38A, 39B, 59, 60) to allow fluid to be sent from the outside of the tank into each chamber of the tank and/or said fluid to be sent from each chamber to the outside of the tank;
- Said one or more fluid intercepting devices being arranged inside the tank;
- And wherein actuation means for activating said one or more fluid intercepting devices are comprised;
- **Characterized in that:**
- Said actuation means comprise a rod that fits into said tank, said rod having an actuation motion so as to activate said fluid intercepting devices.

2. The system according to claim 1, wherein said actuation means are configured to activate said intercepting devices sequentially.

3. The system according to claim 1 or 2, wherein said actuation motion comprises a sliding motion of the rod along the insertion seat of said rod in the tank or a rotation motion of the rod around its longitudinal axis.

4. The system according to one or more of the preceding claims, wherein said fluid intercepting devices are valves (4) or valve elements (60, 61).

5. The system according to one or more of the preceding claims, wherein there are a delivery conduit (8) for leading the fluid in the tank (1), an outlet conduit (7) for expelling the fluid out of the conduit, the delivery conduit and the outlet conduit passing through all the septa in such a way as to penetrate into the relative chambers generated by said septa and wherein, for each chamber, there is a fluid intercepting device, for example a valve, connected to said delivery conduit for filling the relative chamber with said fluid and a further fluid intercepting device, for example a valve, connected to the outlet conduit for expelling the fluid from the relative chamber.

6. The system, according to one or more of the preceding claims, wherein the fluid intercepting devices are in the form of selective passage elements operable between an open position, in which they allow the passage of the fluid, and a closed position in which they prevent said passage, for example in the form of a valve.

7. A plant comprising:
- An apparatus, for example an autoclave;
- A thermal energy storage system according to one or more of the preceding claims and;
- A heat exchanger (21) that puts said apparatus, for example said autoclave, in thermal communication with said thermal energy storage system in such a way that the stratified heat present in the tank of the thermal energy storage system is sequentially transferable to the apparatus through said exchanger and/or vice versa the heat produced by the apparatus is transferable to the tank;
- Preferably the heat exchanger is placed within said apparatus, for example an autoclave.

8. The use of a system, according to one or more of the preceding claims from 1 to 6, for the recovery of the process heat.

9. A thermal energy recovery method, the method comprising the following steps:
- Arrangement of a thermal energy storage system, according to one or more of the preceding claims from 1 to 6;
- Arrangement of an apparatus (20) adapted to operate a process, for example an autoclave (20);
- The system being in fluid communication with said apparatus through a heat exchanger (21) that allows the transfer of heat from the fluid contained in the tank to the apparatus and/or vice versa from the apparatus that produces heat to the tank;
- The method providing for a heating process of the apparatus starting from an initial temperature until reaching a certain final temperature by exploiting the stratified fluid at different temperatures present in the chambers of the tank, said process providing for a passage of said fluid, contained in the tank, through said exchanger (21);
- Said passage through the exchanger starting from the layer of fluid at a lower temperature that is present in the tank in a chamber thereof and continuing in succession with the passage of the layers at an increasing temperature that are present in succession in the other chambers, once each relative layer has completed the release of its heat, thereby raising the temperature of the apparatus in steps.

## Patentansprüche

1. System zur Speicherung thermischer Energie, umfassend:
- mindestens einen Behälter (1), umfassend an seiner Innenseite mindestens eine oder eine Vielzahl von Septen (6), die sich entlang der Höhe des Behälters so überlappen, dass sie zwei oder mehr Kammern definieren, die sich gegenseitig überlappen und es ermöglichen, im Gebrauch eine Schichtung des Fluids im Inneren des Behälters zu erhalten;
- eine oder mehrere Fluidabscheidevorrichtungen (4, 38A, 39B, 59, 60), die es ermöglichen, das Fluid von der Außenseite des Behälters in jede Kammer des Behälters zu leiten und/oder das Fluid von jeder Kammer zur Außenseite des Behälters zu leiten;
- wobei die eine oder mehreren Fluidabscheidevorrichtungen im Inneren des Behälters angeordnet sind;
- und wobei Betätigungsmittel zum Aktivieren der einen oder mehreren Fluidabscheidevorrichtungen enthalten sind;
- **dadurch gekennzeichnet, dass:**
- die Betätigungsmittel eine Stange umfassen, die in den Behälter passt, wobei die Stange eine Betätigungsbewegung ausführt, um die Fluidabscheidevorrichtungen zu aktivieren.

2. System nach Anspruch 1, wobei die Betätigungsmittel so konfiguriert sind, dass sie die Abscheidevorrichtungen nacheinander aktivieren.

3. System nach Anspruch 1 oder 2, wobei die Betätigungsbewegung eine Gleitbewegung der Stange entlang des Einführsitzes der Stange im Behälter oder eine Drehbewegung der Stange um ihre Längsachse umfasst.

4. System nach einem oder mehreren der vorstehenden Ansprüche, wobei die Fluidabscheidevorrichtungen Ventile (4) oder Ventilelemente (60, 61) sind.

5. System nach einem oder mehreren der vorstehenden Ansprüche, wobei eine Zuführleitung (8) zum Zuführen des Fluids in den Behälter (1) und eine Auslassleitung (7) zum Ausstoßen des Fluids aus der Leitung vorhanden sind, wobei die Zuführleitung und die Auslassleitung durch alle Septen hindurchführen, derart, dass sie in die jeweiligen Kammern eindringen, die durch die Septen gebildet werden, und wobei für jede Kammer Fluidabscheidevorrichtung, beispielsweise ein Ventil, vorhanden ist, die mit der Zuführleitung verbunden ist, um die jeweilige Kammer mit dem Fluid zu füllen, und eine weitere Fluidabscheidevorrichtung, beispielsweise ein Ventil, mit der Auslassleitung verbunden ist, um das Fluid aus der jeweiligen Kammer auszulassen.

6. System nach einem oder mehreren der vorstehenden Ansprüche, wobei die Fluidabscheidevorrichtungen die Form von selektiven Durchgangselementen aufweisen, die zwischen einer offenen Stellung, in der sie den Durchgang des Fluids erlauben, und einer geschlossenen Stellung, in der sie den Durchgang verhindern, beispielsweise in Form eines Ventils, betätigt werden können.

7. Anlage, umfassend:
- ein Gerät, zum Beispiel einen Autoklaven;
- ein thermisches Energiespeichersystem nach einem oder mehreren der vorstehenden Ansprüche und;
- einen Wärmetauscher (21), der das Gerät, z. B. den Autoklaven in thermische Verbindung mit dem thermischen Energiespeichersystem bringt, derart, dass die im Behälter des thermischen Energiespeichersystems vorhandene geschichtete Wärme durch den Wärmetauscher nacheinander auf die Vorrichtung übertragbar ist und/oder umgekehrt die von dem Gerät erzeugte Wärme auf den Behälter übertragbar ist;
- vorzugsweise befindet sich der Wärmetauscher in dem Gerät, z. B. einem Autoklaven.

8. Verwendung eines Systems nach einem oder mehreren der vorstehenden Ansprüche 1 bis 6 zur Rückgewinnung der Prozesswärme.

9. Verfahren zur Rückgewinnung thermischer Energie, wobei das Verfahren die folgenden Schritte umfasst:
- Anordnen eines thermischen Energiespeichersystems nach einem oder mehreren der vorstehenden Ansprüche 1 bis 6;
- Anordnen einer Vorrichtung (20), die zum Betreiben eines Prozesses, zum Beispiel eines Autoklaven (20), geeignet ist;
- wobei das System mit dem Gerät über einen Wärmetauscher (21) in Fluidverbindung steht, der die Übertragung von Wärme von dem im Behälter enthaltenen Fluid auf das Gerät und/oder umgekehrt von dem Gerät, das Wärme erzeugt, auf den Behälter ermöglicht;
- wobei das Verfahren einen Erwärmungsprozess des Geräts vom Beginn bis zum Erreichen einer bestimmten Anfangstemperatur-Endtemperatur vorsieht, indem das in den Kammern des Behälters vorhandene geschichtete Fluid mit unterschiedlichen Temperaturen ausgenutzt wird, wobei der Prozess einen Durchgang des im Behälter enthaltenen Fluids durch den Wärmetauscher (21) vorsieht;
- wobei der Durchgang durch den Wärmetauscher mit der Fluidschicht mit niedrigerer Temperatur, die sich in einer Kammer des Behälters befindet, beginnt und nacheinander mit dem Durchgang der Schichten mit steigender Temperatur fortgesetzt wird, die sich nacheinander in den anderen Kammern befinden, sobald jede entsprechende Schicht die Abgabe ihrer Wärme abgeschlossen hat, wodurch sich die Temperatur des Geräts schrittweise erhöht.

## Revendications

1. Système de stockage d'énergie thermique comprenant
- au moins un réservoir (1) comprenant à l'intérieur au moins un ou plusieurs septums (6) superposés sur la hauteur du réservoir de manière à définir deux ou plusieurs chambres superposées permettant d'obtenir, en cours d'utilisation, une stratification du fluide à l'intérieur dudit réservoir ;
- un ou plusieurs dispositifs d'interception des fluides (4, 38A, 39B, 59, 60) pour permettre au fluide d'être envoyé de l'extérieur du réservoir dans chaque chambre du réservoir et/ou ledit fluide d'être envoyé de chaque chambre vers l'extérieur du réservoir ;
- lesdits un ou plusieurs dispositifs d'interception des fluides étant agencés à l'intérieur du réservoir ;
- et dans lequel les moyens d'actionnement pour activer lesdits un ou plusieurs dispositifs d'interception des fluides sont compris ;
- **caractérisée en ce que** :
- lesdits moyens d'actionnement comprennent une tige qui s'insère dans ledit réservoir, ladite tige ayant un mouvement d'actionnement de manière à activer lesdits dispositifs d'interception des fluides.

2. Système selon la revendication 1, dans lequel les moyens d'actionnement sont configurés pour activer les dispositifs d'interception de manière séquentielle.

3. Système selon la revendication 1 ou 2, dans lequel ledit mouvement d'actionnement comprend un mouvement de glissement de la tige le long du siège d'insertion de ladite tige dans le réservoir ou un mouvement de rotation de la tige autour de son axe longitudinal.

4. Système selon l'une ou plusieurs des revendications précédentes, dans lequel les dispositifs d'interception des fluides sont des vannes (4) ou des éléments de vannes (60, 61).

5. Système selon une ou plusieurs des revendications précédentes, dans lequel il y a un conduit de distribution (8) pour amener le fluide dans le réservoir (1), un conduit de sortie (7) pour expulser le fluide hors du conduit, le conduit de distribution et le conduit de sortie traversant tous les septums de manière à pénétrer dans les chambres relatives générées par lesdits septums et dans lequel, pour chaque chambre, il y a un dispositif d'interception du fluide, par exemple une valve, connecté au conduit de distribution pour remplir la chambre relative avec ledit fluide et un autre dispositif d'interception du fluide, par exemple une valve, connecté au conduit de sortie pour expulser le fluide de la chambre relative.

6. Système, selon une ou plusieurs des revendications précédentes, dans lequel les dispositifs d'interception des fluides se présentent sous la forme d'éléments de passage sélectif actionnables entre une position ouverte, dans laquelle ils permettent le passage du fluide, et une position fermée dans laquelle ils empêchent ledit passage, par exemple sous la forme d'une soupape.

7. Installation comprenant :
- un appareil, par exemple un autoclave ;
- un système de stockage d'énergie thermique selon une ou plusieurs des revendications précédentes et ;
- un échangeur de chaleur (21) qui met ledit appareil, par exemple ledit autoclave, en communication thermique avec ledit système de stockage d'énergie thermique de telle sorte que la chaleur stratifiée présente dans le réservoir du système de stockage d'énergie thermique est transférable de manière séquentielle à l'appareil par l'intermédiaire dudit échangeur et/ou inversement la chaleur produite par l'appareil est transférable au réservoir ;
- de préférence, l'échangeur de chaleur est placé à l'intérieur de l'appareil, par exemple un autoclave.

8. Utilisation d'un système, selon une ou plusieurs des revendications précédentes de 1 à 6, pour la récupération de la chaleur du processus.

9. Procédé de récupération de l'énergie thermique, le procédé comprenant les étapes suivantes :
- agencement d'un système de stockage d'énergie thermique, selon une ou plusieurs des revendications précédentes de 1 à 6 ;
- agencement d'un appareil (20) adapté au fonctionnement d'un processus, par exemple un autoclave (20) ;
- le système étant en communication fluidique avec ledit appareil par l'intermédiaire d'un échangeur de chaleur (21) qui permet le transfert de chaleur du fluide contenu dans le réservoir vers l'appareil et/ou inversement de l'appareil qui produit de la chaleur vers le réservoir ;
- le procédé prévoyant un processus de chauffage de l'appareil à partir de jusqu'à atteindre une certaine température initiale température finale en exploitant le fluide stratifié à différentes températures présent dans les chambres du réservoir, ledit processus prévoyant un passage dudit fluide, contenu dans le réservoir, à travers ledit échangeur (21) ;
- ledit passage à travers l'échangeur commence par la couche de fluide à plus basse température présente dans le réservoir dans une de ses chambres et se poursuit successivement avec le passage des couches à température croissante présentes successivement dans les autres chambres, une fois que chaque couche relative a achevé de libérer sa chaleur, augmentant ainsi la température de l'appareil par étapes.
